# EUROPÄISCHE PATENTSCHRIFT

(11) **EP 0 646 328 B1**
(45) Veröffentlichungstag und Bekanntmachung des Hinweises auf die Patenterteilung: **18.10.1995**
(21) Anmeldenummer: 94114532.8
(22) Anmeldetag: 15.09.1994
(51) Int. Cl.: A23L 1/32, A23L 1/015, A23C 15/14

(54) **Verfahren zur Reduktion des Gehalts an Triglyceriden im Eigelb und in eigelbhaltigen Produkten**
Process for reducing the content of triglycerides in egg yolk and in products containing it
Procédé pour réduire le contenu de triglycérides dans le jaune d'oeuf et dans les produits qui en contiennent

(30) Priorität: 16.09.1993 DE 4331565
(43) Veröffentlichungstag der Anmeldung: 05.04.1995
(73) Patentinhaber: Consortium für elektrochemische Industrie GmbH, D-81379 München (DE)
(72) Erfinder: Dressnandt, Günter, D-81679 München (DE); Amann, Manfred, Dr., D-85235 Odelzhausen (DE); Rockinger-Mechlem, Jodoca, D-82205 Gilching (DE)

(56) Entgegenhaltungen:
- EP-A- 0 387 708
- EP-A- 0 492 475
- US-A- 5 063 077
- DATABASE WPI Week 8751, Derwent Publications Ltd., London, GB; AN 87-359752 & JP-A-62 263 143 (KAO CORP.) 16. November 1987
- DATABASE WPI Week 7710, Derwent Publications Ltd., London, GB; AN 77-17257Y & JP-A-52 010 448 (TEIJIN KK ET AL.) 26. Januar 1977
- FOOD SCIENCE AND TECNOLOGY ABSTRACTS AN - 92:13111 DN - 92-09-N0051 International Food Information Service Berkshire, Reading, GB.
- DATABASE WPI Week 9127, Derwent Publications Ltd., London, GB; AN 91-198602 & JP-A-3 124 795 (I. FURUYA) 28. Mai 1991

## Beschreibung

Die Erfindung betrifft ein Verfahren zur Reduktion des Gehalts an Triglyceriden im Eigelb und in eigelbhaltigen Produkten.

Da ein Zusammenhang zwischen triglyceridreicher Ernährung und einer Reihe von Krankheitsbildern als gesichert gilt, ist es ein möglicher Weg zur vorbeugung vor einer Reihe von Erkrankungen, die tägliche Zufuhr an diesen Substanzen durch eine Reduktion des Triglyceridgehalts in Lebensmitteln zu verringern.

Ein wichtiger Bestandteil vieler Lebensmittel, welcher zudem extrem triglyceridreich ist, ist das Eigelb. Der überwiegende Teil dieser Triglyceride liegt in Form von gemischten Glycerinestern gesättigter (ca. 30 bis 35 Gew.%) und einfach ungesättigter Fettsäuren (45 Gew.%) vor. Es ist daher wünschenswert, den Triglyceridgehalt des Eigelbs, insbesondere den Gehalt an Glycerinestern enthaltend gesättigte Fettsäuren, zu reduzieren.

Zur Reduktion des Triglyceridgehalts im Eigelb sind eine Reihe von verfahren bekannt. All diese Verfahren verwenden zur Reduktion des Triglyceridgehalts organische Lösungsmittel.

Beispielhaft seien die folgenden Verfahren genannt:
Die Reduktion des Triglyceridgehalts unter Verwendung unpolarer Lösungsmittel wie Pentan, Hexan oder Ether ist aus DE-A-3.429.703 bekannt. Es wird eine Reduktion des Triglyceridgehalts um 80 bis 95 % erreicht.

Die Reduktion des Triglyceridgehalts unter Verwendung von Dichlorethylen ist aus US 3.607.304 bekannt.

Die bekannten Verfahren haben den Nachteil, daß zu ihrer Durchführung ein hoher technischer Aufwand erforderlich ist. So erfordert der Umgang mit Lösungsmittel besondere technische Maßnahmen, wie beispielsweise Explosionsschutzmaßnahmen.

Weiter besteht bei diesen Verfahren immer die Gefahr, daß gesundheitlich bedenkliche Rückstände der Lösungsmittel zurückbleiben. So sollen chlorierte Lösungsmittel wegen möglicher gesundheitlicher Beeinträchtigungen möglichst gar nicht mehr verwendet werden.

Um die Lösungsmittel möglichst vollständig zu entfernen, sind erhöhte Temperaturen erforderlich. Diese können zu Veränderungen im Lebensmittel, beispielsweise geschmacklicher oder ernährungsphysiologischer Art, führen.

Nachteilhaft ist weiter, daß die bekannten Extraktionstechniken unselektiv sind, d.h. bei ihrer Anwendung werden immer auch essentielle Nahrungsbestandteile abgetrennt.

Aufgabe der Erfindung war es, ein wirtschaftlich sinnvolles, gesundheitlich unbedenkliches Verfahren zur Verfügung zu stellen, welches die Nachteile des Standes der Technik vermeidet und mit geringem technischen Aufwand die Reduktion des Triglyceridgehaltes des Eigelbs und von eigelbhaltigen Produkten ermöglicht.

Die Aufgabe wird gelöst durch ein Verfahren, welches dadurch gekennzeichnet ist, daß
a) Eigelb mit Wasser oder einer wässrigen Salzlösung verdünnt wird,
b) dieser Lösung mindestens ein Cyclodextrin zugesetzt wird,
c) aus dieser Mischung der Cyclodextrin/Triglyceridkomplex abgetrennt wird und
d) das zugesetzte Wasser oder die zugesetzte Salzlösung von dem so behandelten Eigelb in jeweils erwünschtem Ausmaß abgetrennt wird.

Der Zusatz von Cyclodextrinen zu Eigelb ist aus DE-3.928.258 (entspricht US-5.063.077) bekannt. Dennoch ist es aus den folgenden Gründen erstaunlich und unerwartet, daß sich mittels des erfindungsgemäßen Verfahrens Triglyceride aus dem Eigelb entfernen lassen:
Aufgabe von DE-3.928.258 (entspricht US-5.063.077) war es, ein Verfahren zur Verfügung zu stellen, welches eine selektive Reduktion des Cholesteringehalts im Eigelb ermöglicht und welches unter anderem die Nachteile des Stands der Technik nicht aufweist. Als ein Nachteil des Standes der Technik wird angeführt, daß Triglyceride bei der Cholesterinreduktion mittels CO₂-Hochdruckextraktion mitextrahiert werden (US-5.063.077, Spalte 1, Zeilen 47, 48; DE-3.928.258, Spalte 1, Zeile 44). Damit ist nach DE-3.928.258 (respektive US-5.063.077) durch Zusatz von Cyclodextrinen zu Eigelb ausschließlich die selektive Reduktion des Cholesteringehalts zu erwarten. Es ist gemäß DE-3.928.258 nicht zu erwarten, daß durch Zusatz von Cyclodextrin zu Eigelb eine wirtschaftlich sinnvolle Reduktion des Triglyceridgehalts im Eigelb möglich ist. Vielmehr wird der Fachmann durch DE-3.928.258 eher von entsprechenden Versuchen Abstand nehmen, da dort die Triglyceridreduktion ja als ein zu vermeidender Nachteil des Stands der Technik genannt ist, welcher durch das dort offenbarte Verfahren ja gerade vermieden werden soll.

Zur Durchführung des erfindungsgemäßen Verfahrens wird das Eigelb vorzugsweise im Gewichtsverhältnis 1:1 bis 1:6, bezogen auf das eingesetzte Eigelbgewicht, mit Wasser oder einer wässrigen Salzlösung verdünnt.

Als wässrige Salzlösungen können im Prinzip Lösungen vieler durch das Lebensmittelgesetz zugelassenen Salze verwendet werden. Die Lösungen können auch durch getrennte Zugabe von Salz und Wasser zu dem Eigelb in situ gebildet werden.

Vorzugsweise werden Lösungen von sich bei Erwärmung in flüchtige Komponenten zersetzenden Salzen verwendet. Als Beispiele solcher Salze seien Ammoniumcarbonat und Ammoniumbicarbonat genannt.

Es können jedoch auch Lösungen nichtflüchtiger Salze, wie z.B. NaCl oder KCl, verwendet werden. Bei Verwendung dieser Salze ist bei der weiteren Durchführung des erfindungsgemäßen Verfahrens ein zusätzlicher Verfahrensschritt zum Entfernen des Salzes notwendig.

Die Salzkonzentration der verdünnten Eigelblösung sollte zwischen 0 und 20 Gew.%, bevorzugt zwischen 1 und 10 Gew.%, besonders bevorzugt zwischen 2 und 6 Gew.%, bezogen auf das eingesetzte unverdünnte Eigelbgewicht, liegen.

Der verdünnten Eigelblösung wird mindestens ein Cyclodextrin in einer Menge größer 3 Gew.%, bezogen auf das eingesetzte unverdünnte Eigelbgewicht, zugegeben. Das Cyclodextrin wird mit der Eigelblösung innig vermischt. Dies geschieht beispielsweise durch Einrühren in die verdünnte Eigelblösung. Dieser Schritt wird vorzugsweise bei einer Temperatur von bis 4°C bis zu 50°C, besonders bevorzugt bei Raumtemperatur, worunter eine Temperatur von etwa 22°C zu verstehen ist, durchgeführt.

Als Cyclodextrine lassen sich alle Cyclodextrine, auch in beliebigen Mischungen, einsetzen.

Geeignet sind beispielsweise α-, β- oder γ-Cyclodextrin.

Bevorzugt geeignet sind β-Cyclodextrin und γ-Cyclodextrin.

Besonders bevorzugt geeignet ist γ-Cyclodextrin.

Der Entfettungsgrad des Eigelbs hängt sowohl von der verwendeten Cyclodextrin-Menge als auch überraschenderweise von dem Typ des eingesetzten Cyclodextrins ab.

β-Cyclodextrin wird bevorzugt in einer Menge von 45 bis 80 Gew.%, besonders bevorzugt in einer Menge von 70 bis 80 Gew.%, bezogen auf das eingesetzte unverdünnte Eigelbgewicht, verwendet.

γ-Cyclodextrin wird bevorzugt in einer Menge von 45 bis 150 Gew.%, besonders bevorzugt in einer Menge von 90 bis 120 Gew.%, bezogen auf das eingesetzte unverdünnte Eigelbgewicht, verwendet.

Mit steigender Cyclodextrin-Menge nimmt der Entfettungsgrad zu. Bei Verwendung von β-Cyclodextrin wird die maximal mögliche Triglyceridreduktion des Eigelbs durch Zusatz von etwa 80 Gew.% β-Cyclodextrin, bezogen auf das eingesetzte unverdünnte Eigelbgewicht, erreicht. Bei Verwendung von γ-Cyclodextrin wird die optimale Triglyceridreduktion des Eigelbs durch Zusatz von etwa 120 Gew.% γ-Cyclodextrin, bezogen auf das eingesetzte unverdünnte Eigelbgewicht, erreicht. Eine weitere Erhöhung der Extraktionsrate ist durch eine weitere Erhöhung der zugesetzten γ-Cyclodextrin-Menge zwar möglich, wirtschaftlich und technologisch aber nicht sinnvoll.

Bei Verwendung gleicher Mengen unterschiedlicher Cyclodextrine werden mit γ-Cyclodextrin besonders im Mengenbereich ab etwa 80 Gew.%, bezogen auf das eingesetzte unverdünnte Eigelbgewicht, überraschenderweise wesentlich bessere Extraktionsergebnisse erreicht als mit α- oder β-Cyclodextrin. So liegt die maximal erreichbare Extraktionsrate für Triglyceride bei Verwendung von 120 Gew.% γ-Cyclodextrin mit ca. 75 % wesentlich höher als die maximal erreichbare Extraktionsrate bei Verwendung von 80 bis 120 Gew.% β-Cyclodextrin (ca. 35 %).

Der mit Triglyceriden beladene Cyclodextrin-Komplex wird mittels bekannter Verfahren zur Trennung von Feststoffen und Flüssigkeiten von der flüssigen Eigelbmischung abgetrennt. Bevorzugt wird dies durch Zentrifugation mit vorzugsweise 15000 bis 30000 g für 60 bis 120 min. bewerkstelligt.

Das zugesetzte Wasser bzw. die wässrige Salzlösung wird in jeweils gewünschtem Ausmaß vorzugsweise durch Erhitzen auf etwa 60°C im Vakuum entfernt. Durch diese Aufkonzentrierungstechnik werden die sich bei Erwärmung in flüchtige Komponenten zersetzenden Salze ebenfalls entfernt.

Das Wasser bzw. die wässrige Salzlösung läßt sich jedoch ebenso durch andere Verfahren, wie beispielsweise durch Ultrafiltration oder Umkehrosmose, entfernen.

Bei Verwendung dieser Verfahren ist, ebenso wie bei Verwendung von Lösungen nichtflüchtiger Salze, die Entfernung der Salze durch Cross-Flow-Ultrafiltration oder Elektrodialyse oder ein anderes in der Entsalzungstechnik übliches Verfahren notwendig.

Das verwendete Cyclodextrin kann nach Dekomplexierung und Desorption der Triglyceride wiederverwendet werden. Die Rückgewinnung des Cyclodextrins erfolgt vorzugsweise nach einem in der Praxis üblichen Dekomplexierverfahren wie beispielsweise durch mehrmalige Extraktion der im beladenen Cyclodextrin-Komplex vorhandenen Eigelbkomponenten mit Ethanol sowie einer anschließenden Abtrennung des im Ethanol nicht löslichen freien Cyclodextrins. Dieses wird anschließend durch Lösen in heißem Wasser und Filtration von eventuell noch vorhandenen ungelösten Bestandteilen befreit. Das auf diese Weise mit einer Ausbeute von ca. 70 bis 90 % rückgewonnene Cyclodextrin kann entweder in Form der erhaltenen wässrigen Lösung oder in daraus durch Kristallisation oder Sprühtrocknung erhaltener Pulverform für weitere erfindungsgemäße Komplexierungen wiederverwendet werden.

Mittels des erfindungsgemäßen Verfahrens lassen sich besonders gut gemischte Glycerinester enthaltend gesättigte Fettsäuren aus dem Eigelb entfernen.

Durch Wiederholung des erfindungsgemäßen Verfahrens lassen sich beliebig hohe Entfettungsgrade erreichen.

Im Anschluß an das erfindungsgemäße Verfahren können eventuell noch vorhandene Reste an Cyclodextrin mittels an sich bekannter Verfahren, wie sie beispielsweise in US 4.980.180 (entspricht DE-4.001.611) beschrieben sind, entfernt werden.

Die folgenden Beispiele dienen der weiteren Erläuterung der Erfindung:

### Beispiel 1

100 g Eigelb (Triglyceridgehalt 32 Gew.%) wurden mit 240 g destilliertem Wasser unter Rühren und gleichzeitiger Zugabe von 8 g Ammoniumcarbonat verdünnt. Anschließend wurden dem Eigelbgemisch 43 g β-Cyclodextrin zugegeben und ca. 4 h bei Raumtemperatur gerührt. Danach wurde der gebildete Cyclodextrin-Komplex durch Zentrifugation bei 4°C (60 min; 18000 g) vom Eigelbgemisch getrennt.

Anschließend wurde aus dem Eigelbgemisch unter Vakuum und Erwärmen bei 60°C das Ammoniumcarbonat sowie ein Teil des zugegebenen Wassers entfernt. Um eine zu starke Einengung der Eigelbmischung zu verhindern, wurde von Zeit zu Zeit 60°C warmes, destilliertes Wasser zugegeben und das Gesamtvolumen auf das zum Schluß erwünschte Ausgangsgewicht des Eigelbs von 100 g eingestellt. Schließlich wurde in der auf 40°C abgekühlten Eigelbmischung (100 g) der Restgehalt an β-Cyclodextrin von 0,43 g durch Zugabe von 0,043 g α-Amylase Typ XA-Fungal innerhalb einer Stunde unter Rühren vollkommen abgebaut.

Das auf diese Weise erhaltene Eigelb hatte einen Triglyceridgehalt von 23,7 %. Dies entsprach einer 26 %igen Reduktion des Triglyceridgehalts gegenüber dem unbehandelten Eigelb.

### Beispiel 2

100 g Eigelb (Triglyceridgehalt 32 Gew.%) wurden mit 240 g destilliertem Wasser unter Rühren und gleichzeitiger Zugabe von 8 g Ammoniumcarbonat verdünnt. Anschließend wurde das Eigelbgemisch mit 43 g γ-Cyclodextrin behandelt und ca. 4 h bei Raumtemperatur gerührt. Danach wurde der gebildete γ-Cyclodextrin-Komplex durch Zentrifugation (60 Minuten bei 4°C mit 18 000 Upm) vom Eigelbgemisch getrennt. Anschließend wurde aus dem Eigelbgemisch unter Vakuum und Erwärmen bei 60°C in ca. 2 Stunden das Ammoniumcarbonat vollständig entfernt. Um eine zu starke Einengung der Eigelbmischung zu vermeiden, wurde von Zeit zu Zeit 60°C warmes, destilliertes Wasser zugegeben und das Gesamtvolumen auf das zum Schluß erwünschte Ausgangsgewicht von 100 g eingestellt. Schließlich wurde durch Zugabe von α-Amylase Typ XA-Fungal (0,1 g α-Amylase pro 1 g γ-Cyclodextrin) der Restgehalt an γ-Cyclodextrin innerhalb 1 Stunde unter Rühren bei 40°C vollkommen abgebaut. Das auf diese Weise erhaltene Eigelb hatte einen Triglyceridgehalt von 24 %. Dies entsprach einer 25 %igen Reduzierung des Triglyceridgehalts gegenüber dem unbehandelten Eigelb.

### Beispiel 3

100 g Eigelb analog Beispiel 1 wurden mit 480 g destilliertem Wasser unter Rühren und Zugabe von 16 g Ammoniumcarbonat verdünnt. Nach der anschließenden Zugabe von 86 g β-Cyclodextrin wurde das Gemisch ca. 4 Stunden lang weitergerührt und anschließend der sich gebildete Komplex durch Zentrifugation bei 4°C (60 min; 18000 Upm) abgetrennt. Nach dem Entfernen des Ammoniumcarbonats und des zugegebenen Wassers durch Erhitzen unter Vakuum auf 60 - 65°C und des Abbaus des restlichen β-Cyclodextrin-Gehalts mit Hilfe von α-Amylase hatte das behandelte Eigelb einen Gesamttriglyceridgehalt von 20,7 %, was einer 35 %igen Reduktion entspricht.

### Beispiel 4

Beispiel 3 wurde wie beschrieben durchgeführt, jedoch wurde statt β-Cyclodextrin γ-Cyclodextrin verwendet.

Das erhaltene Produkt hatte einen Gesamttriglyceridgehalt von 11,5 %, was einer 64 %igen Verringerung des Ausgangsgehalts an Triglyceriden entspricht.

Tabelle 1 gibt die qualitativen Analysenergebnisse der aus dem Eigelb extrahierten Triglyceride, ausgedrückt in Fettsäuremethylester-Anteilen (Flächen-%), unbehandelt und nach Durchführung von Beispiel 4 wieder. Es bedeutet:
- C16:0: Palmitinsäuremethylester
- C16:1: Palmitoleinsäuremethylester
- C18:0: Stearinsäuremethylester
- C18:1: Ölsäuremethylester
- C18:2: Linolsäuremethylester
- C18:3: Linolensäuremethylester
Die extrahierten Triglyceride wurden verseift, die entstandenen Fettsäuren in Methylester umgewandelt und diese dann gaschromatographisch (Werte in Tab. 1 a, b) bestimmt. Zusätzlich wurden die Methylester massenspektroskopisch (MS) identifiziert.

**Tabelle 1**

| Gefundene Fettsäuremethylester (Art; Anteile in Flächen-%) | | | | | | | |
|---|---|---|---|---|---|---|---|
| Untersuchtes Eigelb | | C16:0 | C16:1 | C18:0 | C18:1 | C18:2 | C18:3 |
| Eigelb | a | 22,3 | 3,1 | 6,8 | 43,2 | 18,1 | 0,6 |
| unbehand- | b | 22,8 | 3,6 | 6,1 | 42,1 | 18,8 | 0,6 |
| elt | MS | 23,7 | 4,7 | 11,5 | 36,0 | 17,5 | 0,8 |
| Eigelb | a | 20,8 | - | 5,0 | 47,1 | 27,0 | - |
| behandelt | b | 20,4 | 4,2 | 4,4 | 44,6 | 22,6 | 1,3 |
| (aus Bsp.4) | MS | 21,0 | 5,7 | 5,3 | 40,7 | 21,0 | 1,7 |

### Beispiel 5

100 g Eigelb analog Bsp. 1 wurden mit 600 g destilliertem Wasser verdünnt und nach Zugabe von 20 g Ammoniumcarbonat und 120 g γ-Cyclodextrin ca. 4 Stunden lang weitergerührt. Nach Abtrennung des gebildeten Komplexes durch Zentrifugation und Entfernen des Ammoniumcarbonats und des zugegebenen Wassers unter Vakuum bei ca. 60°C, erhält man ein Eigelb mit einem Restgehalt an Triglyceriden von 7,5 %. Das entspricht einer 76 %igen Reduktion gegenüber dem Ausgangsprodukt.

Die in den Beispielen 1 bis 5 verwendeten Versuchsbedingungen und Ergebnisse sind in Tab. 2 zusammengefaßt.

**Tabelle 2**

| Reduktion des Triglyceridgehalts in Eigelb mit Hilfe von β- und γ-Cyclodextrin | | | | | |
|---|---|---|---|---|---|
| | Versuchsbedingungen und Ergebnisse mit β-Cyclodextrin (β-CD) und γ-Cyclodextrin (γ-CD) | | | | |
| | Bsp.1 | Bsp.2 | Bsp.3 | Bsp.4 | Bsp.5 |
| Kenndaten | β-CD | γ-CD | β-CD | γ-CD | γ-CD |
| Verhältnis Eigelb/CD | 1:0,4 | 1:0,4 | 1:0,8 | 1:0,8 | 1:1,2 |
| Verhältnis Eigelb/H₂O | 1:2,4 | 1:2,4 | 1:4,8 | 1:4,8 | 1:6 |
| Reduktion des Triglyceridgehalts (%) | 26 | 26 | 35 | 64 | 76 |

## Patentansprüche

1. Verfahren zur Reduktion des Gehalts an Triglyceriden im Eigelb und in eigelbhaltigen Produkten, dadurch gekennzeichnet, daß
a) Eigelb mit Wasser oder einer wässrigen Salzlösung verdünnt wird,
b) dieser Lösung mindestens ein Cyclodextrin zugesetzt wird,
c) aus dieser Mischung der Cyclodextrin/Triglycerid-komplex abgetrennt wird und
d) das zugesetzte Wasser oder die zugesetzte Salzlösung von dem so behandelten Eigelb in jeweils erwünschtem Ausmaß abgetrennt wird.

2. Verfahren zur Reduktion des Gehalts an gemischten Glycerinestern enthaltend gesättigte Fettsäuren im Eigelb und in eigelbhaltigen Produkten, dadurch gekennzeichnet, daß
a) Eigelb mit Wasser oder einer wässrigen Salzlösung verdünnt wird,
b) dieser Lösung mindestens ein Cyclodextrin zugesetzt wird,
c) aus dieser Mischung der Cyclodextrin/Triglycerid-komplex abgetrennt wird und
d) das zugesetzte Wasser oder die zugesetzte Salzlösung von dem so behandelten Eigelb in jeweils erwünschtem Ausmaß abgetrennt wird.

3. Verfahren gemäß Anspruch 1 oder 2, dadurch gekennzeichnet, daß das Eigelb mit Wasser oder einer wässrigen Salzlösung im Verhältnis 1:1 bis 1:6, bezogen auf das eingesetzte Eigelbgewicht, verdünnt wird und das Cyclodextrin in einer Menge größer 3 Gew.% zugegeben wird.

4. Verfahren gemäß Anspruch 1, 2 oder 3, dadurch gekennzeichnet, daß als wässrige Salzlösung eine Lösung von sich bei Erwärmung in flüchtige Komponenten zersetzenden Salzen verwendet wird.

5. Verfahren gemäß Anspruch 1, 2 oder 3, dadurch gekennzeichnet, daß als Cyclodextrin β- und/oder γ-Cyclodextrin eingesetzt wird.

6. Verfahren gemäß Anspruch 5, dadurch gekennzeichnet, daß β-Cyclodextrin in einer Menge von bis zu 80 Gew.% und/oder γ-Cyclodextrin in einer Menge von bis zu 120 Gew.% eingesetzt wird.

7. Verfahren gemäß Anspruch 6, dadurch gekennzeichnet, daß β-Cyclodextrin in einer Menge von 70 bis 80 Gew.% eingesetzt wird.

8. Verfahren gemäß Anspruch 6, dadurch gekennzeichnet, daß γ-Cyclodextrin in einer Menge von 90 bis 120 Gew.% eingesetzt wird.

## Claims

1. Process for reducing the content of triglycerides in egg yolk and in products containing egg yolk, characterized in that
a) egg yolk is diluted with water or an aqueous salt solution,
b) at least one cyclodextrin is added to this solution,
c) the cyclodextrin/triglyceride complex is separated off from this mixture and
d) the added water or the added salt solution is separated off to the respective desired extent from the egg yolk thus treated.

2. Process for reducing the content of mixed glycerol esters containing saturated fatty acids in egg yolk and in products containing egg yolk, characterized in that
a) egg yolk is diluted with water or an aqueous salt solution,
b) at least one cyclodextrin is added to this solution,
c) the cyclodextrin/triglyceride complex is separated off from this mixture and
d) the added water or the added salt solution is separated off to the respective desired extent from the egg yolk thus treated.

3. Process according to Claim 1 or 2, characterized in that the egg yolk is diluted with water or an aqueous salt solution in the ratio 1:1 to 1:6, based on the egg yolk weight used, and the cyclodextrin is added in an amount greater than 3 % by weight.

4. Process according to Claim 1, 2 or 3, characterized in that the aqueous salt solution used is a solution of salts which decompose into volatile components on heating.

5. Process according to Claim 1, 2 or 3, characterized in that the cyclodextrin used is β- and/or γ-cyclodextrin.

6. Process according to Claim 5, characterized in that β-cyclodextrin is used in an amount of up to 80 % by weight and/or γ-cyclodextrin is used in an amount of up to 120 % by weight.

7. Process according to Claim 6, characterized in that β-cyclodextrin is used in an amount of 70 to 80 % by weight.

8. Process according to Claim 6, characterized in that γ-cyclodextrin is used in an amount of 90 to 120 % by weight.

## Revendications

1. Procédé de réduction de la teneur en triglycérides dans le jaune d'oeuf et dans les produits qui en contiennent, caractérisé en ce que
a) le jaune d'oeuf est dilué par de l'eau ou une solution saline aqueuse,
b) on ajoute à cette solution au moins une cyclodextrine,
c) le complexe cyclodextrine/triglycérides est séparé de ce mélange, et
d) l'eau ajoutée ou la solution saline ajoutée est séparée du jaune d'oeuf ainsi traité en une proportion désirée.

2. Procédé de réduction de la teneur en esters mixtes de glycérine contenant des acides gras saturés dans le jaune d'oeuf et dans les produits qui en contiennent, caractérisé en ce que
a) le jaune d'oeuf est dilué par de l'eau ou une solution saline aqueuse,
b) on ajoute à cette solution au moins une cyclodextrine,
c) le complexe cyclodextrine/triglycérides est séparé de ce mélange, et
d) l'eau ajoutée ou la solution saline ajoutée est séparée du jaune d'oeuf ainsi traité en une proportion désirée.

3. Procédé suivant la revendication 1 ou 2, caractérisé en ce que le jaune d'oeuf est dilué par de l'eau ou une solution saline aqueuse en un rapport de 1:1 à 1:6, sur base du poids de jaune d'oeuf utilisé, et en ce que la cyclodextrine est ajoutée en une quantité supérieure à 3 % en poids.

4. Procédé suivant la revendication 1, 2 ou 3, caractérisé en ce que l'on utilise comme solution saline aqueuse une solution de sels qui se décomposent en des composants volatils par chauffage.

5. Procédé suivant la revendication 1, 2 ou 3, caractérisé en ce que l'on utilise comme cyclodextrine la β- ou la γ-cyclodextrine.

6. Procédé suivant la revendication 5, caractérisé en ce que l'on utilise la β-cyclodextrine en une quantité pouvant atteindre 80 % en poids et/ou la γ-cyclodextrine en une quantité pouvant atteindre 120 % en poids.

7. Procédé suivant la revendication 6, caractérisé en ce que l'on utilise la β-cyclodextrine en une quantité comprise entre 70 et 80 % en poids.

8. Procédé suivant la revendication 6, caractérisé en ce que l'on utilise la γ-cyclodextrine en une quantité comprise entre 90 et 120 % en poids.
